Europäisches Patentamt

European Patent Office

Office européen des brevets

(11) Publication number: **0 292 912**
**A1**

## (12) EUROPEAN PATENT APPLICATION

(21) Application number: 88108223.4

(22) Date of filing: 24.05.88

(51) Int. Cl.⁴: **G01S 13/20 , G01S 13/24**

(30) Priority: 26.05.87 IT 4798687

(43) Date of publication of application:
30.11.88 Bulletin 88/48

(84) Designated Contracting States:
AT BE CH DE FR GB LI NL SE

(71) Applicant: SELENIA INDUSTRIE
ELETTRONICHE ASSOCIATE S.p.A.
Via Tiburtina, KM 12.400
I-00131 Roma(IT)

(72) Inventor: Sabatini, Sergio
Via P.E. Castagnola 32
Rom(IT)
Inventor: Russo, Artenio
Via Castello 13
Tora e Piccilli (CE)(IT)
Inventor: Rodriquez, Giuseppe
Via Alberico II, 11
Rom(IT)
Inventor: Camertoni, Giancarlo
Via G. Leopardi 12
Guidonia (RM)(IT)
Inventor: Pratesi, Piero
Via Francesco Massi 12
Rom(IT)

(74) Representative: Gustorf, Gerhard, Dipl.-Ing.
Patentanwalt Dipl.-Ing. Gerhard Gustorf
Mühlenstrasse 1
D-8300 Landshut(DE)

(54) Device for radar with pulse-to-pulse frequency agility, utilized for the detection and recognition of multiple-time-around echoes.

(57) Device for Radar utilized to detect multiple time around echoes with the capability of transmitting in frequency agility and, besides the advantages due to this type of technique, further, capable of reading the ambiguity of distance directly by separating in frequency the multiple time around echoes. The device described is applicable to any pulse radar, such as for example, search or tracking, in which it is necessary to detect targets and recognise multiple-time-around echoes. Nevertheless its application is especially suited to a multifunctional radar (with phased array antenna and monopulse capability).

FIG 2

# Device for radar with pulse-to-pulse frequency agility, utilised for the detection and recognition of multiple-time-around echoes

The invention presented is related to a radar with pulse-to-pulse frequency agility used for the detection and recognition of multiple-time-around echoes. It comes within the field of radar systems.

In applications where it is convenient to use a fairly high value of PRF the resulting non-ambiguous range may be shorter than the one required by the radar system.

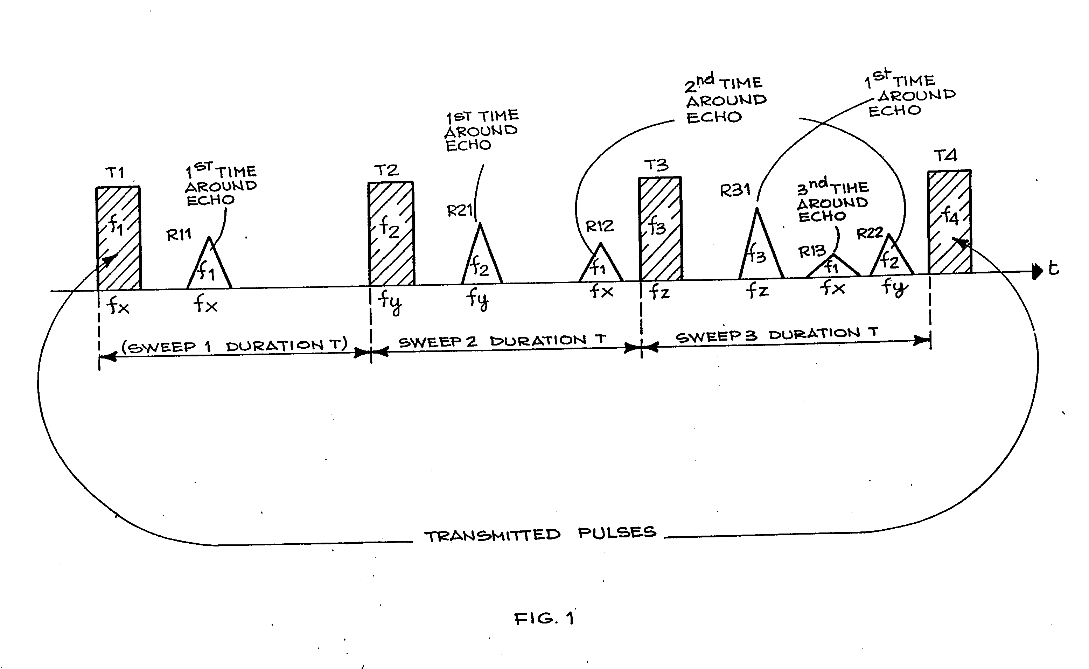

If this occurs it is not possible to transmit in frequency agility from pulse to pulse, except at the cost of losing the multiple-time-around echoes: in fact the receiver is tuned, at every sweep, to the frequency of the pulse transmitted at the beginning of the sweep (Fig. 1).

The device concerned enables transmission to be made in frequency agility from pulse to pulse without losing the multiple-time-around echoes. Moreover once the detection has been performed it allows the immediate resolution of the range ambiguity.

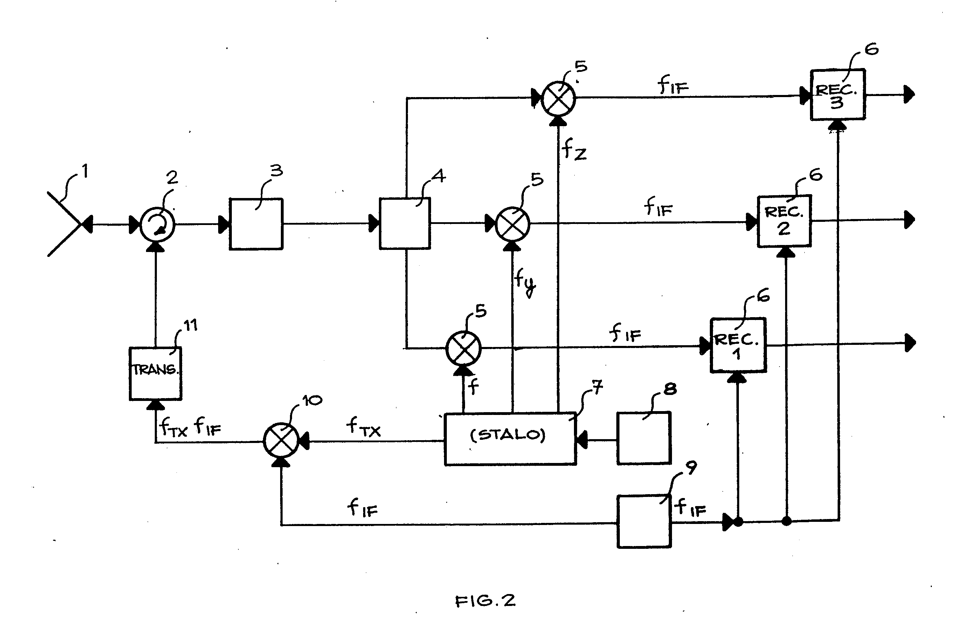

It is based on a multi-channel receiver in which the tuning of each receiving channel is performed as described below. Refer to block diagram in Fig. 2 typical of a coherent chain radar.

For the sake of simplicity an arrangement with single frequency conversion is shown, but everything which is said is equally applicable to systems with several stages of conversion. The oscillator group of the STALO contains all the frequencies at which the transmitter is capable of transmitting.

In fixed frequency operation the same STALO frequency is distributed both to the mixer that precedes the power amplifier and to the mixer of the radio frequency stage of receiver 1. In this case the operation is that of a single channel conventional radar: in fact receivers 2 and 3 are not used.

In the frequency agility mode always referring to fig. 2, two type of schemes shall be described, both providing the same results.

a) First scheme:

Starting from the beginning of the frequency agility mode of operation after the transmission of the first pulse at $F_x$, the corrisponding STALO frequency $f_x$ is switched on channel 1. During the time from $t = o$ to $t = T$ (where $T$ = sweep duration) the output of channel 1 is the useful one for targets detected at ranges within $R = \frac{cT}{2}$. After the transmission at Fy of the second pulse, during the time from $t = T$ to $t = 2T$, the corresponding STALO frequency fy is switched to channel 1 while $f_x$ is switched to channel 2 and therefore the output of channel 2 provides the detection of targets detected at ranges between R and 2R while the output of channel 1 provides the detection of targets within the range R.

After the transmission at $F_z$ of the third pulse during the time from $t = 2T$ to $t = 3T$, the corresponding STALO frequency $f_z$ is switched to channel 1, fy to channel 2 and fx to channel 3 and therefore channel 3 provides detection of targets at ranges between 2R and 3R, channel 2 provides the ones between R and 2R and channel 1 the ones within R.

From then onwards this device has reached normal operation and is capable of discriminating the multiple time around echoes up to the third by separating them on the three channels. More precisely only first time around echoes are detected in receiver 1 (corresponding to targets within the non-ambiguous range of the radar). In receiver 2 only the second time around echoes are detected (corresponding to targets situated within the non-ambiguous range of the radar and up to twice that value). In receiver 3 only third time around echoes are detected.

b) Second scheme:

After the transmission at $F_x$ of the first pulse the corresponding STALO frequency $f_x$ is tuned on channel 1 where it is kept fixed for 3 consecutive sweeps.

After the transmission at $F_y$ of the secondo pulse, channel 2 is tuned on $f_y$ where it is kept for 3 consecutive sweeps. The same applies to channel 3 which is tuned to $f_z$ for 3 consecutive sweeps after the transmission at $F_z$ of the third pulse.

In such a way, although the transmission frequency is changed at every sweep, a target can be detected on the same channel up to a range equal to 3R because the STALO frequency to which it is tuned is fixed for 3 P.R.T. while the transmission frequency continuously changes from sweep to sweep. The outputs of the 3 channels are fed to the signal processor where they are reordered in time before further processing. It is important to note that if the P.R.T. (Pulse Repetition Time) changes from sweep to sweep then the maximum range that can be resolved in both schemes is the one corresponding to the sum of the maximum non ambiguous ranges relevant to each P.R.T.

Moreover, the only condition imposed to ensure the correct functioning is that the interval between 2 transmissions of the same frequency must not be less than the ambiguity number in distance that is to be resolved, or to the number of receiving channels. There is no other constraint affecting the frequency agility, which can be chosen a priori according to any law, deterministic, or random, or also by means of a device which relects the least jammed frequency. It is only necessary that the system memorizes the last two frequencies transmitted so as to be able to correctly activate the STALO outputs by means of the selection commands. The STALO switching occurs during pulse transmission time when the three receivers are inactive.

In principle it is possible to resolve multiple-time-around echoes of any order provided that the necessary number of receiving channels is matched to that order.

The device, which is the subject of this claim for patent is now described with reference to the 2 schemes already mentioned.

This description is illustrative in purpose and not meant to limit the application of the device.

Fig. 1 shows diagrammatically the multiple-time-around echoes obtained from transmitting in frequency agility. It shows: T1 - T4 - pulses transmitted in frequency agility. $R_{iJ}$ pulses received as echoes on the transmitted pulse $T_i$ and relative to the sweep J.

Fig. 2 shows the principle of application of the radar subject of this invention. It shows:

    1 Antenna
    2 Duplexer
    3 RF Amplifier
    4 Divider
    5 Mixers of the three (or more) receiver channels
    6 Receiver channels (three or more)
    7 RF oscillator group (STALO)
    8 STALO selection logic
    9 IF oscillator
    10 Transmission mixer
    11 Power amplifier

Fig. 3 shows the block diagram of a radar with monopulse receivers. It contains:

    1 Switch
    2 Σ Channel
    3 Δ Azimuth channel
    4 Δ Elevation channel
    5 RF Amplifiers
    6 Σ Channel receiver
    7 Auxiliary (Δ) receivers
    8 Receiver channel mixer
    9 Distributor
    10 Oscillator group
    11 Frequency selection logics
    12 Frequency multiplier
    13 Transmission Mixer
    14 Power amplifier

    15 Duplexer

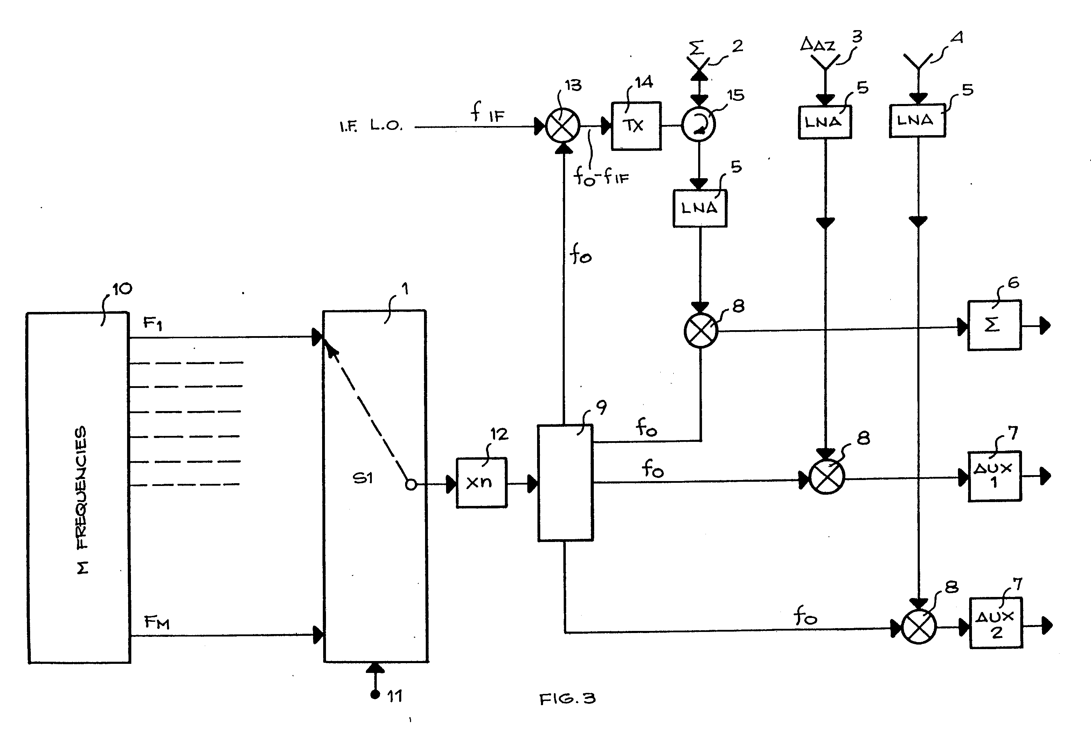

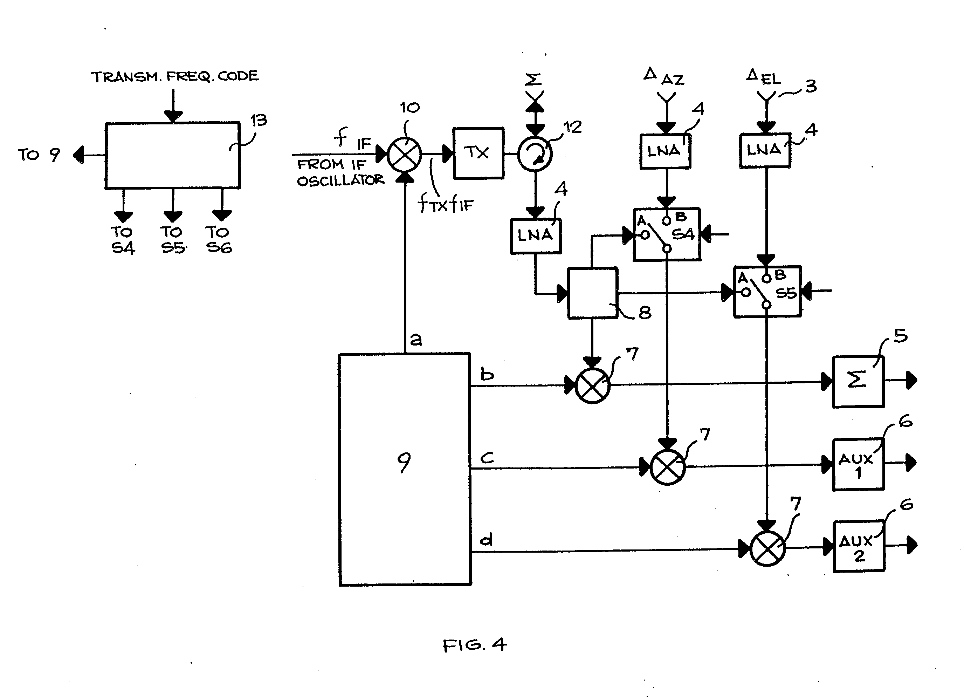

Fig. 4 shows the radar block diagram on which the claim of the invention is based, in its form of realisation at present preferred and derived from the conventional diagram of Fig. 3. It shows:

    1 Σ Channel
    2 Δ Azimuth channel
    3 Δ Elevation channel
    4 RF amplifier
    S4 and S5 selection switches
    5 Σ Channel receiver
    6 Auxiliary (Δ) receivers
    7 Receiver channel mixer
    8 Distributor
    9 Oscillator group
    10 Transmission mixer
    11 Power amplifier
    12 Duplexer
    13 Control logic

The invention relates to a multifunctional radar with a phased-array antenna and monopulse channels for the measurement of the azimuth and elevation angles; the detection of the targets is performed on the receiver connected to the Σ channel while the $\Delta$ $_{AZ}\Delta$ and $_{EL}$ receiver are used for the measurement of the coordinate angles. The diagram showing the principle of such a radar is given in Fig. 3.

In this figure the tuning of the three channels is the same; if multiple-time-around echoes have to be detected, the radar cannot use a waveform with frequency agility from pulse to pulse.

The device which is the subject of the claim overcomes this limitation as shown in Fig. 4.

The operation of the device is as follows. During the search function, in which monopulse measurement is not strictly required, switches S4 and S5 are set on A. Therefore the AUX1, AUX2 receivers, receive only the signals from the Σ beam. In frequency agility operation, the frequency transmitted at every sweep is selected by the control logic according to the type of agility required (deterministic, pseudo-random adaptive); the tuning of the receivers is performed according to one of the schemes a or b, already described.

Schemes a and b differ only in the implementation of block N° 9 in fig. 4.

Scheme a:

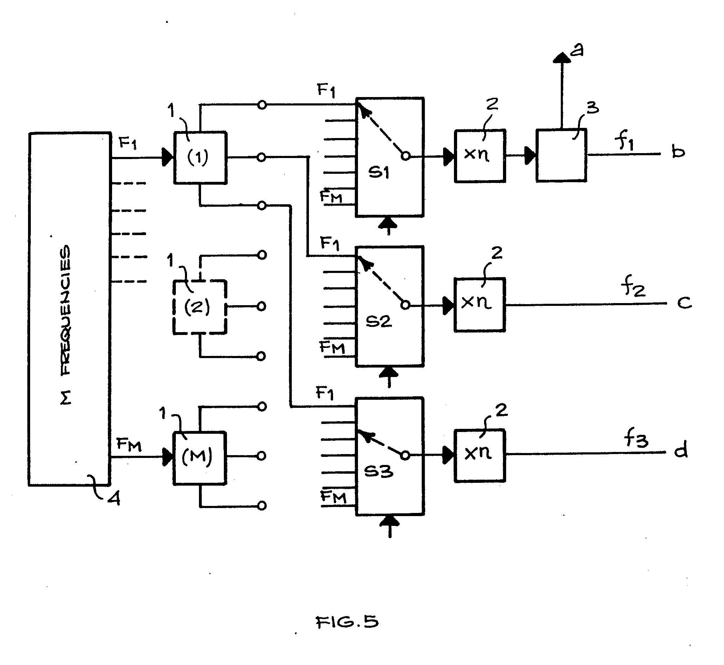

With reference to fig. 5 which shows the frequency generation and switching logic, S1 controls the actual transmitted frequency while S2 and S3 tune AUX1 and AUX2 respectively on the two immediately preceding transmitted frequencies.

In this way the 1$^{st}$ time around echoes will appear only in the Σ channel, the 2nd time around echoes only in the AUX1 channel and the 3rd time-around echoes only in the AUX2 channel. In particular, fig. 5 shows:

1 Group oscillator distributors
2 Frequency multipliers
3 Distributor
4 Oscillator group

Scheme b:

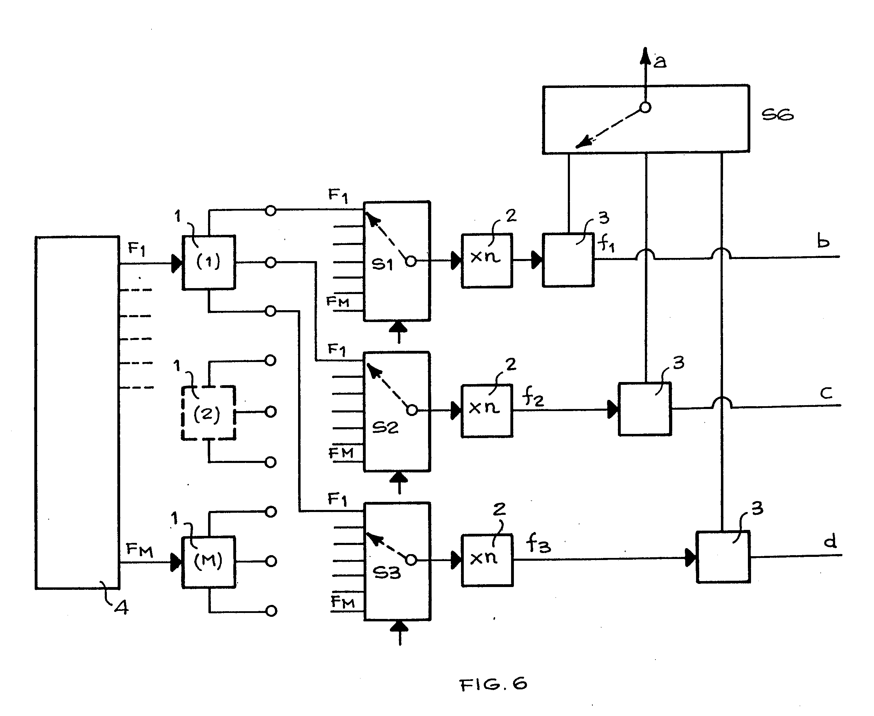

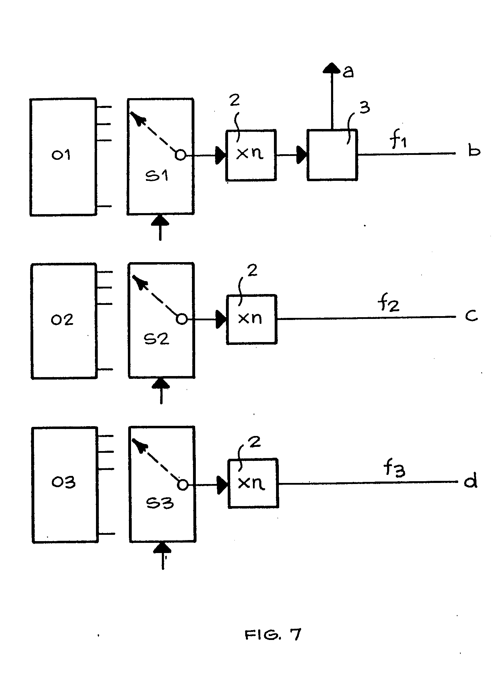

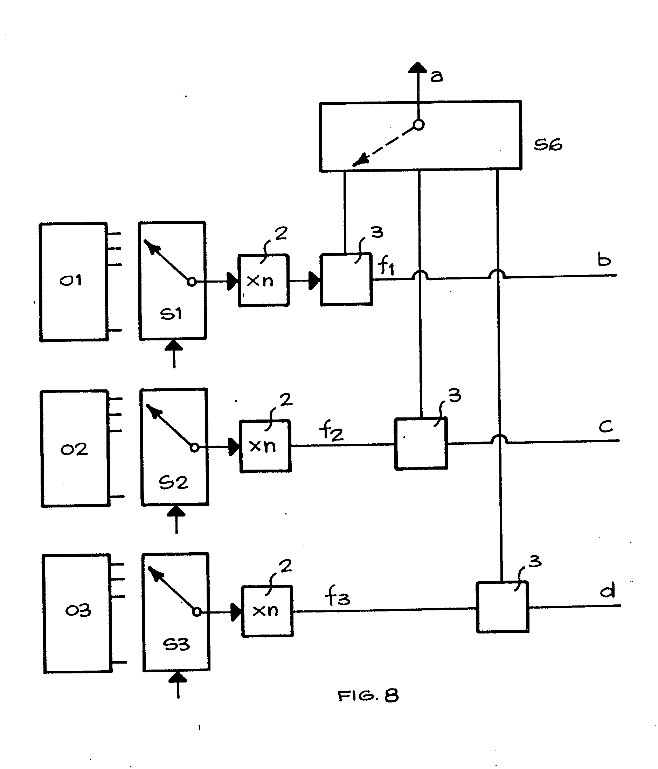

With reference to fig. 6, and to the functional description of scheme b, the three distributors N° 3 provide the frequency for the receiver mixers and through the switch S6 the frequency for the transmission mixer. S6 is switched from pulse to pulse while the frequencies on which each channel is tuned are changed every three sweeps.

Alternative solutions to those represented in figgs. 5 and 6 are the ones shown respectively in figgs. 7 and 8 where instead of having a single frequency generation group followed by M dividers (where M is equal the number of frequencies generated), we have three frequency generation groups (01, 02, 03).

During the tracking function, in which the monopulse measurement is requested, the switches S4, S5 are set on B (see Fig. 4).

In this function the order of time-around echo of the target is known a priori, because it results from the search and/or from information stored in the track file.

In frequency agility mode , the frequency transmitted every sweep is selected as in search. If the target corresponds to a first-time-around echo the three receivers are tuned to the same transmitted frequency.

If the target corresponds to a multiple-time-around echo, of order K> 1, the three receivers shall be tuned to the frequency transmitted (k-1) sweeps before.

Concluding, the device described allows the transmition of a pulse to pulse frequency agility to be used even if multiple time around targets are to be detected.

The device allows the automatic recognition of the order of time-around echoes by a separation into several parallel receiving channels. It can be used both on a search radar and on a tracking radar, but its preferred use is in a multi-functional radar in which the auxiliary receiving channel already exist for the monopulse measurement. In this case the necessary extra hardware is reduced to a minimum.

**Claims**

1. Radar with pulse to pulse frequency agility characterized by having several receiving channels (6 of Fig. 2) each tuned to a frequency (suitably) chosen as a function of the sequence of the transmitted frequencies.

2. Radar with pulse to pulse frequency agility as in claim 1, characterized by having a divider (4 of Fig. 2) at the output of the RF amplifier (3 of Fig. 2) which allows the RF signal to be received on several channels (3 of Fig. 2).

3. Radar with pulse to pulse frequency agility as in claims 1 and 2 characterized by having an RF oscillator group from the output of which several frequencies can be selected simultaneously and independently.

4. Radar with pulse to pulse frequency agility as in claims 1 to 3, characterized by having a STALO selection circuit (8 of Fig. 2) which allows the selection of the frequencies available at the output of the STALO, and this selection circuit being provided with a memory for the frequencies of several pulses previously transmitted by the radar.

5. Radar with pulse to pulse frequency agility (preferred solution) and with auxiliary receivers for the monopulse measurement, characterized by having a divider (8 of Fig. 4) at the output of the RF Amplifier on the Σ channel which permits the RF signal to be distributed on the three receiving channels (5 and 6 of Fig. 4).

6. Radar as in claim 5 characterized by having two switches (S4, S5 in fig. 4) that permit the signals coming from the antenna difference channels or Σ channel to be selected on two auxiliary receivers.

7. Radar as in claims 5 and 6 characterized by having a number of STALO distributors (1 of figs. 5, 6), equal to the number of frequencies generated, each of these distributors being capable of feeding the three switches S1, S2, S3 from which, after multiplication, frequencies may be selected simultaneously and independently from among all the frequencies available in the radar.

8. Radar as in claims 5 and 6 characterized by having a number of distributors (3 of figs. 6, 8) equal to the number of channels capable of feeding switch S6 which selects the proper frequency to be fed to the transmitter.

9. Radar as in claims 5 to 8 characterized by the oscillator group (9), represented in Fig. 4 by a single block, being constituted by several blocks so that it is possible to feed directly the three receiving channels (5 and 6 of Fig. 4) without the use of distributors (figg. 7, 8).

10. Radar in accordance with the preceding claims 5 to 9 characterized by having a STALO selection circuit (13 of Fig. 4) which directly controls the oscillator group (9 of fig. 4) and a receiving channel selection circuit which controls the switches S4, S5, S6; this selection circuit being provided with a memory for the frequencies of the pulses previously transmitted by the radar.

FIG. 1

FIG.2

FIG.3

0 292 912

FIG. 4

0 292 912

FIG.5

0 292 912

FIG. 6

0 292 912

FIG. 7

0 292 912

FIG. 8

0 292 912

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 412 852 (LABORATOIRE CENTRAL DE TELECOMMUNICATIONS) * figure 3; page 5, lines 17-28 * | 1 | G 01 S 13/20 G 01 S 13/24 |
| A | EP-A-0 089 284 (THOMSON-CSF) * figures 1,2; abstract; page 2, lines 28-34 * | 1 | |
| A | FR-A-2 443 688 (LABORATOIRE CENTRAL DE TELECOMMUNICATIONS) * figures 1,3; page 2, lines 7-14 * | 1 | |
| A | US-A-3 828 348 (J.S. MURRAY) * figure 1; abstract * | 1 | |
| A | US-A-3 383 686 (J.R. DAVIS et al.) * figure 1; column 2, lines 9-55 * | 1 | |

| | |
|---|---|
| | TECHNICAL FIELDS SEARCHED (Int. Cl.4) |
| | G 01 S 13/20 G 01 S 13/24 |

The present search report has been drawn up for all claims

| Place of search | Date of completion of the search | Examiner |
|---|---|---|
| BERLIN | 05-09-1988 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)